(19) Europäisches Patentamt
European Patent Office
Office européen des brevets

(11) **EP 4 764 824 A1**

(12) **EUROPEAN PATENT APPLICATION**

(43) Date of publication:
**24.06.2026 Bulletin 2026/26**

(21) Application number: **25221486.1**

(22) Date of filing: **08.12.2025**

(51) International Patent Classification (IPC):
**G06F 7/72** (2006.01)       **G06F 17/14** (2006.01)

(52) Cooperative Patent Classification (CPC):
**G06F 7/724; G06F 17/141; G06F 17/142;
G06F 17/144; G06F 17/16; G09C 1/00;
H04L 9/008; H04L 9/3218;** H04L 2209/125

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 CN 202411898638**

(71) Applicant: **Alipay (Hangzhou) Digital Service
Technology
Co., Ltd.
Hangzhou, Zhejiang 310000 (CN)**

(72) Inventors:
• **ZHANG, Haibin
Hangzhou, Zhejiang, 310000 (CN)**
• **SONG, Jie
Hangzhou, Zhejiang, 310000 (CN)**

(74) Representative: **Winter, Brandl - Partnerschaft
mbB
Alois-Steinecker-Straße 22
85354 Freising (DE)**

(54) **FAST NUMBER-THEORETIC TRANSFORM NTT ACCELERATION CHIP**

(57)    Provided is an NTT acceleration chip, including: a twiddle factor computing module, including a plurality of pre-computing units and a plurality of real-time computing units, where the plurality of pre-computing units is configured to compute several initial lines of twiddle factors and an inter-line step factor in parallel by using a primitive root of unity; and the plurality of real-time computing units is configured to repeatedly and iteratively compute other lines of twiddle factors in parallel according to the inter-line step factor; a transposition module, including a plurality of transposition units, configured to perform transposition processing on an input sequence in parallel, to obtain a transposed sequence; and an NTT computing module, including a plurality of butterfly computing units, configured to perform a butterfly operation of orders and a point quantity in parallel according to the twiddle factors and the transposed sequence, to obtain an output sequence.

FIG. 2

## Description

### TECHNICAL FIELD

One or more embodiments of this specification relate to the field of computers, and in particular, to a fast number-theoretic transform (NTT) acceleration chip.

### BACKGROUND

Modern public key cryptography is one of important technologies in the field of information security, is a cryptography technology based on mathematics and computer science, and aims at ensuring secure communication and data exchange. The public key cryptography greatly improves information transmission security because for an attacker, a private key cannot be figured out by using a public key, thereby ensuring information confidentiality. The public key cryptography makes it more feasible to ensure information security, but the security depends on difficulty of a mathematical algorithm, and therefore faces a huge performance challenge when large-scale data is processed.

Fast number-theoretic transform NTT is an important algorithm in the field of public key cryptography. The algorithm is mainly used for computing a point value representation of a polynomial on a ring, to accelerate a multiplication operation of the polynomial on the ring. The NTT algorithm is used in fields such as a lattice-based post-quantum cryptography algorithm, a hash function, a digital signature, and fully homomorphic encryption and zero-knowledge proof in privacy computing technologies. Therefore, software and hardware high-performance implementation of the NTT is currently one of research hotspots of modem cryptography. With continuous development of cryptography, the application prospect of the NTT is predicted to be wider.

The modem homomorphic encryption algorithm integrates a residue number system (RNS) algorithm. In one aspect, there is a scenario of frequent modulus switching, and a twiddle factor also synchronously changes. In the other aspect, a large modulus is decomposed into a plurality of small moduli, so that there is a plurality of groups of different twiddle factors. Therefore, NTT computing on a long polynomial is inevitably accompanied with work related to generation of a large quantity of twiddle factors. A common practice is to reserve a buffer inside a computing chip, and load a pre-computed twiddle factor to the reserved buffer inside the chip in a manner of a plurality of times of migration from an external memory of the chip. One of difficulties and challenges for hardware implementation of the NTT algorithm is: On-chip storage resources in a hardware environment and bandwidth resources from an off-chip memory to a computing chip are both limited. Consequently, efficiency of NTT computing is relatively low.

### SUMMARY

One or more embodiments of this specification describe an NTT acceleration chip, which can improve efficiency of NTT computing.

According to a first aspect, provided is a fast number-theoretic transform NTT acceleration chip, the acceleration chip including:

a twiddle factor computing module, including a plurality of pre-computing units and a plurality of real-time computing units, where the plurality of pre-computing units is configured to compute several initial lines of twiddle factors and an inter-line step factor in parallel by using a primitive root of unity; and the plurality of real-time computing units is configured to repeatedly and iteratively compute, for one line of twiddle factors of the several initial lines of twiddle factors obtained by the plurality of pre-computing units, other lines of twiddle factors different from the several initial lines of twiddle factors in parallel according to the inter-line step factor;

a transposition module, including a plurality of transposition units, configured to perform transposition processing on an input sequence in parallel, to obtain a transposed sequence; and

an NTT computing module, including a plurality of butterfly computing units, configured to perform a butterfly operation of orders and a point quantity in parallel according to the twiddle factors obtained by the twiddle factor computing module and the transposed sequence obtained by the transposition module, to obtain an output sequence, where the twiddle factor computing module, the transposition module, and the NTT computing module respectively correspond to different stages of a first pipeline processing task.

In a possible implementation, the pre-computing units and the real-time computing units respectively correspond to different stages of a second pipeline processing task, and the second pipeline processing task is a sub-task of the first pipeline processing task.

In a possible implementation, the twiddle factor computing module further includes:

a plurality of pre-storage units, configured to store in parallel the several initial lines of twiddle factors and the inter-line step factor obtained by the plurality of pre-computing units, where
the plurality of real-time computing units is specifically configured to read, from the plurality of pre-storage units, the one line of twiddle factors of the several initial lines of twiddle factors and the inter-line step factor obtained by the plurality of pre-computing units.

In a possible implementation, the twiddle factor computing module further includes:

a plurality of buffer units, configured to buffer in parallel the other lines of twiddle factors different from the several initial lines of twiddle factors obtained by the plurality of real-time computing units; and
a plurality of interconnection selection units, configured to select in parallel a twiddle factor required by a butterfly operation of a target order from a line of twiddle factors buffered by the plurality of buffer units, and connect the selected twiddle factor to a butterfly computing unit of the target order.

In a possible implementation, the primitive root of unity is externally inputted.
In a possible implementation, the pre-computing unit includes several modular multiplication units, and the several modular multiplication units are configured to perform modular multiplication computing in parallel, to obtain the inter-line step factor including a maximum power of the primitive root of unity, and the initial lines of twiddle factors in a column direction of a pre-computed line quantity, where the maximum power and the pre-computed line quantity are determined according to a pipelining depth of the modular multiplication units.
Further, the modular multiplication computing includes:

performing first modular multiplication on two primitive roots of unity of a same power; or
performing second modular multiplication on a primitive root of unity of a first power and a primitive root of unity of a second power, where a difference between the second power and the first power is 1.

In a possible implementation, the plurality of real-time computing units is specifically configured to repeatedly and iteratively compute, for one line of twiddle factors of several initial lines of twiddle factors in a column direction that are obtained by the pre-computing units, other lines of twiddle factors different from the several initial lines of twiddle factors in the column direction according to an inter-line step factor in the column direction; and
repeatedly and iteratively compute, for one line of twiddle factors of several initial lines of twiddle factors in a line direction, other lines of twiddle factors different from the several initial lines of twiddle factors in the line direction according to an inter-line step factor in the line direction.
Further, the interconnection selection unit includes:

a counter subunit, configured to generate, according to an externally inputted clock cycle signal, a time rhythm control signal that uses an NTT point quantity as a cycle;
a control subunit, configured to determine, according to the time rhythm control signal generated by the counter subunit, a specific point location and a specific order that are used for NTT computing and that are of a twiddle factor outputted at a current moment;
an address computing subunit, configured to compute an index number of the currently corresponding twiddle factor according to the specific point location and the specific order for the NTT computing that are obtained by the control subunit; and
a selection subunit, configured to select, according to the index number obtained by the address computing subunit, the corresponding twiddle factor from a line of twiddle factors buffered by the plurality of buffer units.

Further, the interconnection selection unit further includes:

a plurality of interconnection subunits, configured to connect to the plurality of butterfly computing units in a one-to-one correspondence, where
the selection subunit is further configured to output the selected twiddle factor to an interconnection subunit corresponding to the index number.

According to the acceleration chip provided in this embodiment of this specification, the twiddle factor computing module, the transposition module, and the NTT computing module included in the acceleration chip respectively correspond to different stages of the first pipeline processing task, on-chip full-pipelining real-time computing of twiddle factors is implemented, and consumption of off-chip interface bandwidth and on-chip storage resources is reduced to the greatest extent; and interfaces between the twiddle factor computing module and the NTT computing module are integrated, thereby implementing full-pipelining real-time computing of the NTT computing module. The twiddle factor computing module includes a plurality of pre-computing units, and is configured to pre-compute several initial lines of twiddle factors and an inter-line step factor, so that on-chip pre-storage resources and off-chip interface bandwidth can be effectively reduced, and a large quantity of twiddle factors do not need to be externally loaded; and pre-computing the several initial lines of twiddle factors and the inter-line step factor can effectively compress a pipelining gap between real-time computing units, thereby implementing real-time computing between twiddle factor lines, and effectively improving computing efficiency. In conclusion, efficiency of NTT computing can be improved.

**BRIEF DESCRIPTION OF THE DRAWINGS**

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of an implementation scenario according to an embodiment disclosed in this specification;
FIG. 2 is a schematic structural diagram of an NTT acceleration chip according to an embodiment;
FIG. 3 is a schematic diagram of an NTT pipelining operation according to an embodiment;
FIG. 4 is a schematic structural diagram of a twiddle factor computing module according to an embodiment;
FIG. 5 is a schematic diagram of a twiddle factor computing pipelining operation according to an embodiment;
FIG. 6 is a flowchart of an online twiddle factor computing method according to an embodiment;
FIG. 7 is a schematic diagram of computing initial lines in parallel according to an embodiment;
FIG. 8 is a schematic diagram of correspondingly computing an initial second line according to an initial first line according to an embodiment;
FIG. 9 is a schematic structural diagram of a real-time computing array according to an embodiment;
FIG. 10 is a schematic diagram of a real-time computing process and a computing time sequence according to an embodiment;
FIG. 11 is a schematic diagram of a composition structure of an interconnection selection unit according to an embodiment; and
FIG. 12 is a schematic diagram of a correspondence between interconnection units and NTT computing units according to an embodiment.

**DETAILED DESCRIPTION**

The following describes, with reference to the accompanying drawings, solutions provided in this specification.
First, some basic concepts used in the embodiments of this specification are described.
Fully homomorphic encryption (FHE): It refers to an encryption solution, where addition and multiplication operations may be performed in an encrypted state for any plurality of times, and a result same as that of plaintext data may be obtained. This means that complex computing can be performed on encrypted data without decrypting the data. FHE is at a relatively high level in homomorphic encryption, provides a most powerful computing function, but is also in a most complex and compute-intensive form.
Zero-knowledge proof (ZKP): It refers to a cryptography tool, allowing one of two parties of communication with mutual mistrust to prove validity of a statement to the other party while not leaking any additional information. A prover can convince a verifier that a judgment is true without providing any useful information to the verifier. The zero-knowledge proof is essentially a protocol involving two or more parties, that is, a series of steps that need to be taken by two or more parties to complete a task. The prover proves to the verifier and convinces the verifier that the prover knows or owns a message, but cannot leak any information about the proven message to the verifier in the proving process.
Fast number-theoretic transform (NTT): The NTT and an FFT algorithm in a discrete form are very similar in principles, and principally differ from each other only in that operation fields are different. An operation object of the FFT is a complex number field, and an operation object of the NTT is a prime number field. Therefore, the NTT algorithm does not involve any problem of precision rounding and error truncation. The NTT algorithm is widely applied to fields such as lattice-based post-quantum cryptography, fully homomorphic encryption, and zero-knowledge proof, and is one of important algorithms in the field of modern cryptography.
Butterfly computing: It is a core operation in the NTT, which respectively performs weighting and multiplication operations on two pieces of input data, and then respectively outputs operation results to two different locations. The butterfly operation may implement different NTT algorithms in different combination manners, for example, radix 2-butterfly and radix 4-butterfly. Usually, the butterfly operation in the NTT algorithm is a recursive process, where original N data points are divided into two parts of N/2 data points, and the two parts are respectively subject to complex operations before being combined. Recursive iterations at different levels are integrated by using a butterfly operation.

Twiddle factor: It refers to a complex constant multiplied in a butterfly operation of a Cooley-Tukey fast Fourier transform (FFT) algorithm. Therefore, the constant is located on a unit circle on a complex plane, and has a twiddle effect on a multiplicand on the complex plane. In an NTT computing process, an operation object is a prime number field, and therefore, a difference between the NTT and the FFT lies in that number fields of operations are different.

Modular multiplication (MM): a · b mod N, where two inputted integers a and b are multiplied, and then a modulo operation is performed on N to obtain a remainder.

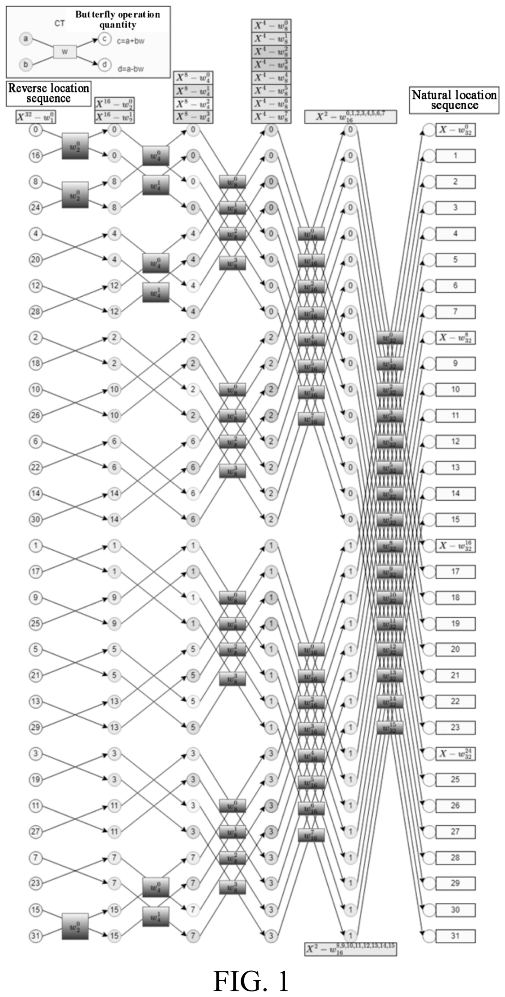

FIG. 1 is a schematic diagram of an implementation scenario according to an embodiment disclosed in this specification. The implementation scenario involves an NTT acceleration chip. It may be understood that the NTT acceleration chip is configured to implement NTT computing, so as to improve efficiency of the NTT computing. Referring to FIG. 1, 32-point NTT butterfly transform of a CT type is shown, where $w_{2N}^{n}$ $N = 16$; $n = 0, 1, ...15$ represents a twiddle factor in each butterfly transform; and according to a property of power addition of twiddle factors in a multiplication sense, all $w_{2N}^{n}$ may be computed by using a primitive root of unity.

This solution provides an online real-time twiddle factor computing method and a corresponding computing structure, to accelerate NTT computing, and it is expected that the following effects can be achieved: The use of an on-chip memory is effectively reduced, thereby reducing the area of a chip; the quantity of access times of the chip to an external storage unit and an access data volume are effectively reduced, thereby reducing an access bandwidth requirement for the external storage unit; a computing process has real-time performance and the entire process is pipelined, thereby improving computing efficiency of the entire NTT; real-time configuration of a primitive root of unity of a twiddle factor is supported, NTT computing of different lengths is supported, and the solution has flexibility and universality; and the design of a minimum computing unit is supported, so that hardware circuits of different scales can be flexibly integrated.

This solution mainly involves: performing recursive computing by using a minimum primitive root of unity (that is, an primitive root) in the NTT computing, to obtain a minimum set of twiddle factors, where same twiddle factors inside different orders are merged; real-time recursive computing is performed on the minimum set of twiddle factors by using several powers of the minimum primitive root of unity; all elements in the minimum set of twiddle factors are distributed to several computing units to perform parallel recursive computing; one-dimensional NTT computing is extended to multi-dimensional NTT computing, thereby extending twiddle factor computing space to multi-dimensions; twiddle factors of all the computing units are selected according to NTT orders and a point quantity, and are outputted to twiddle factor interconnection units; and all the twiddle factor interconnection units are in a one-to-one correspondence with all the NTT computing units, to implement complete NTT computing.

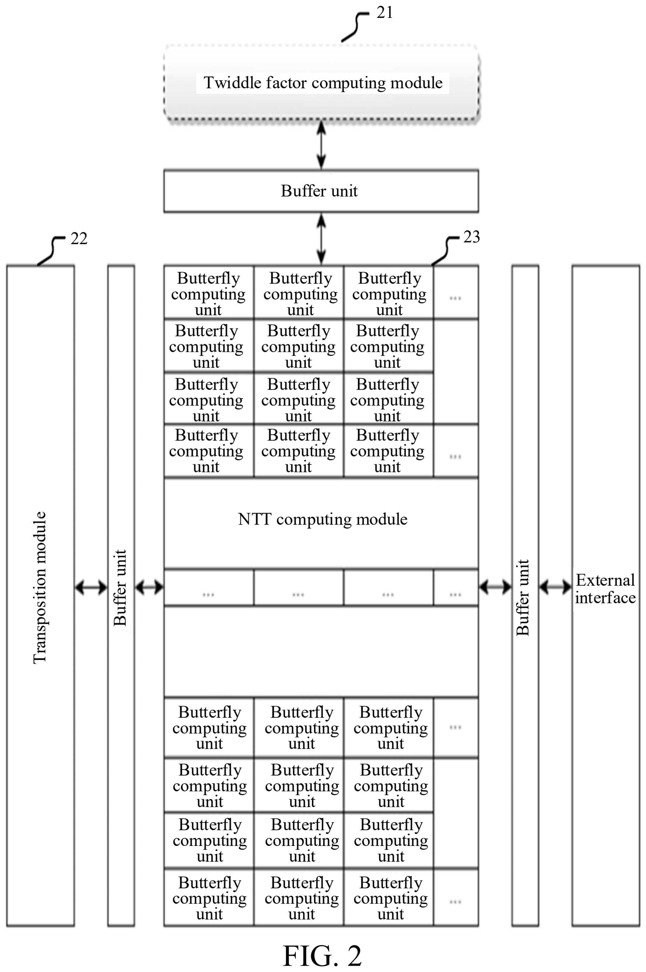

FIG. 2 is a schematic structural diagram of an NTT acceleration chip according to an embodiment. The acceleration chip may be configured to implement multi-dimensional NTT computing based on the implementation scenario shown in FIG. 1. FIG. 2 is a schematic block diagram of an NTT acceleration chip according to an embodiment. As shown in FIG. 2, the acceleration chip includes:

a twiddle factor computing module 21, including a plurality of pre-computing units and a plurality of real-time computing units, where the plurality of pre-computing units is configured to compute several initial lines of twiddle factors and an inter-line step factor in parallel by using a primitive root of unity; and the plurality of real-time computing units is configured to repeatedly and iteratively compute, for one line of twiddle factors of the several initial lines of twiddle factors obtained by the plurality of pre-computing units, other lines of twiddle factors different from the several initial lines of twiddle factors in parallel according to the inter-line step factor;

a transposition module 22, including a plurality of transposition units, configured to perform transposition processing on an input sequence in parallel, to obtain a transposed sequence; and

an NTT computing module 23, including a plurality of butterfly computing units, configured to perform a butterfly operation of orders and a point quantity in parallel according to the twiddle factors obtained by the twiddle factor computing module 21 and the transposed sequence obtained by the transposition module 22, to obtain an output sequence, where the twiddle factor computing module 21, the transposition module 22, and the NTT computing module 23 respectively correspond to different stages of a first pipeline processing task.

It should be noted that the twiddle factor computing module 21, the transposition module 22, and the NTT computing module 23 in this solution are independent of each other in an entire computing process. The twiddle factor computing module may include a plurality of twiddle factor computing units, and each twiddle factor computing unit may include a pre-computing unit and a real-time computing unit. The transposition module may include a plurality of transposition units. The NTT computing module may include a plurality of butterfly computing units. The butterfly computing unit is referred to as a butterfly unit for short.

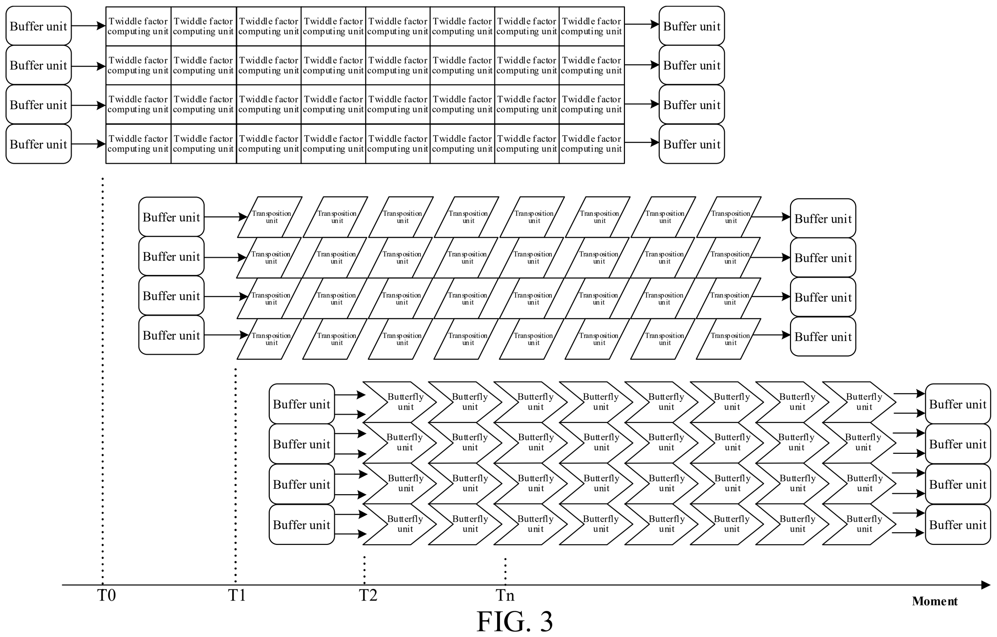

FIG. 3 is a schematic diagram of an NTT pipelining operation according to an embodiment. Referring to FIG. 3, at a moment Tn, twiddle factor computing, transposition computing, and butterfly computing are simultaneously performed; and buffer units in the figure are only configured to deal with bandwidth fluctuation between data interfaces, and do not perform large-scale data storage.

In an example, the pre-computing units and the real-time computing units respectively correspond to different stages of a second pipeline processing task, and the second pipeline processing task is a sub-task of the first pipeline processing task.

In an example, the twiddle factor computing module 21 further includes:

a plurality of pre-storage units, configured to store in parallel the several initial lines of twiddle factors and the inter-line step factor obtained by the plurality of pre-computing units, where
the plurality of real-time computing units is specifically configured to read, from the plurality of pre-storage units, the one line of twiddle factors of the several initial lines of twiddle factors and the inter-line step factor obtained by the plurality of pre-computing units.

In an example, the twiddle factor computing module 21 further includes:

a plurality of buffer units, configured to buffer in parallel the other lines of twiddle factors different from the several initial lines of twiddle factors obtained by the plurality of real-time computing units; and
a plurality of interconnection selection units, configured to select in parallel a twiddle factor required by a butterfly operation of a target order from a line of twiddle factors buffered by the plurality of buffer units, and connect the selected twiddle factor to a butterfly computing unit of the target order.

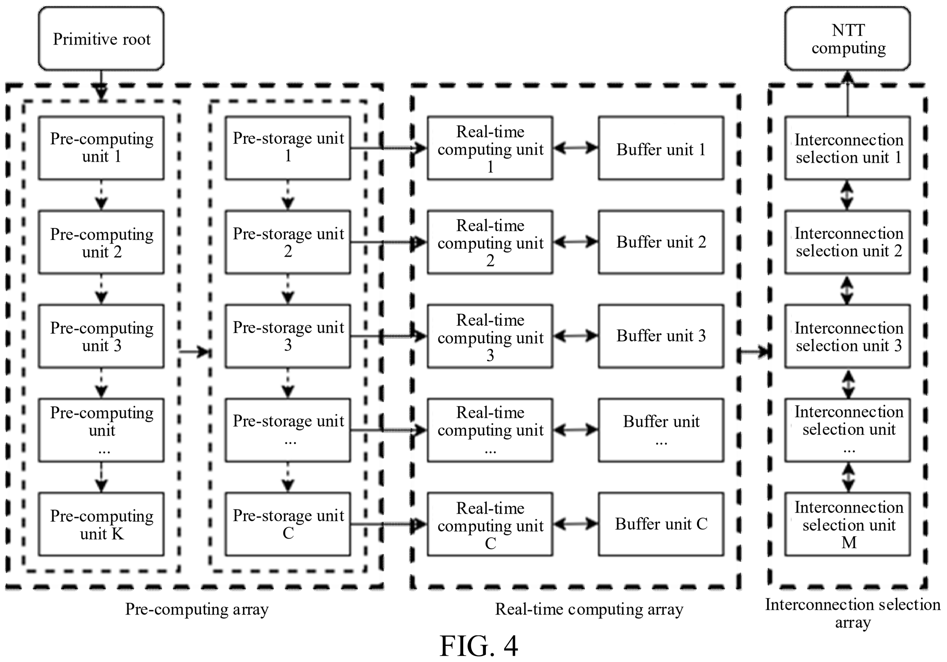

FIG. 4 is a schematic structural diagram of a twiddle factor computing module according to an embodiment. Referring to FIG. 4, pre-computing units, pre-storage units, real-time computing units, and interconnection selection units in this solution are independent of each other in an entire computing process. Channel quantities C of the pre-storage units, the real-time computing units, and buffer units are the same, are different from the channel quantity M of the interconnection selection units, and are different from the channel quantity K of the pre-computing units, where C, M, and K depend on execution efficiency of the units, and have no particular association; and buffer units in the figure are only configured to deal with bandwidth fluctuation between data interfaces, and do not perform large-scale data storage. It may be understood that a primitive root is an abbreviation of a primitive root of unity.

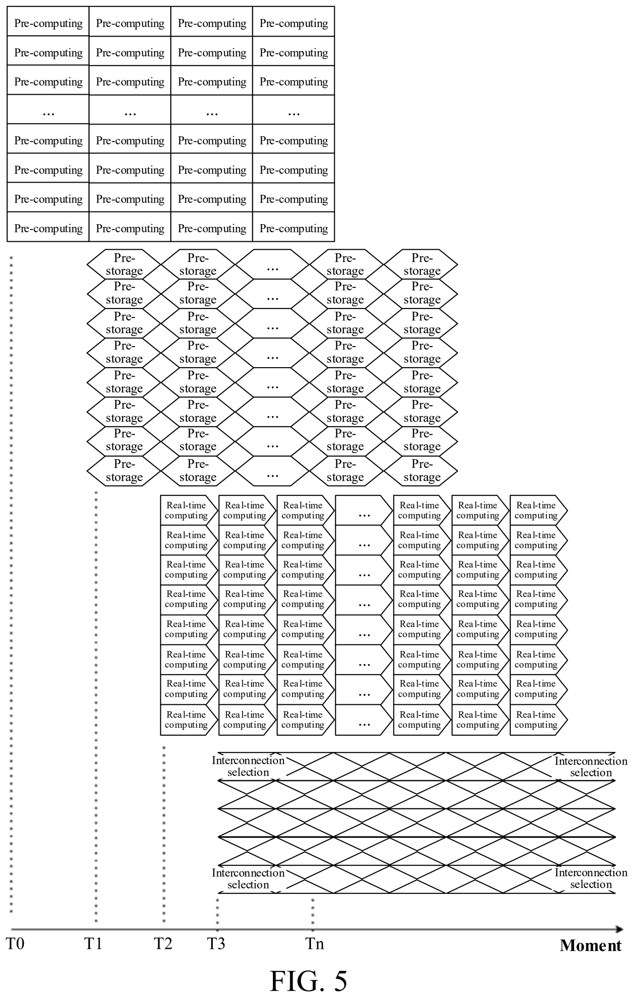

FIG. 5 is a schematic diagram of a twiddle factor computing pipelining operation according to an embodiment. Referring to FIG. 5, at a moment Tn, pre-computing, pre-storage, real-time computing, and interconnection selection are simultaneously performed.

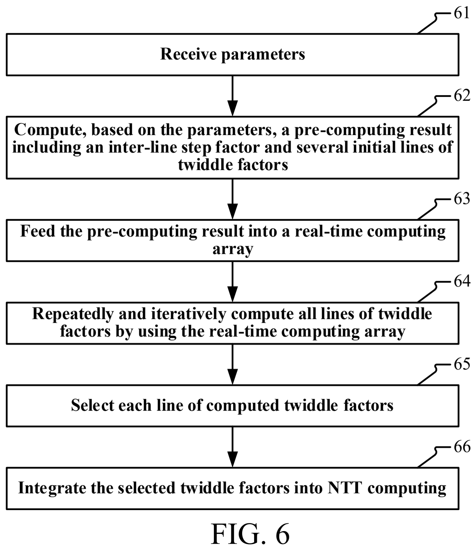

FIG. 6 is a flowchart of an online twiddle factor computing method according to an embodiment. The method may be based on the structure of the twiddle factor computing module shown in FIG. 4. As shown in FIG. 6, the online twiddle factor computing method in this embodiment includes the following steps: Step 61: Receive parameters. Step 62: Compute, based on the parameters, a pre-computing result including an inter-line step factor and several initial lines of twiddle factors. Step 63: Feed the pre-computing result into a real-time computing array. Step 64: Repeatedly and iteratively compute all lines of twiddle factors by using the real-time computing array. Step 65: Select each line of computed twiddle factors. Step 66: Integrate the selected twiddle factors into NTT computing. Specific execution manners of the foregoing steps are described below.

First, in step 61, parameters are received. It may be understood that, the foregoing parameters include at least a primitive root of unity.

In an example, the primitive root of unity is externally inputted.

Optionally, an externally inputted primitive root of unity w is received, where the quantity of 2D-NTT points is $N = R \cdot C$, for example, R lines and $C$ columns, $R = C$ and are each an integer power of 2 generally, and the pipelining depth of modular multiplication is PipDepth.

Without loss of generality, the inputted parameters may be from an external control unit. For example, the parameters include several primitive roots of unity $w_1...w_n$, where the quantity of 2D-NTT points, the quantity of lines, and the quantity of columns are $N, R, C(N = R \cdot C)$, and the pipelining depth $PipDepth$ of modular multiplication herein may be the same as or different from the quantity of primitive roots of unity. A control chip such as a CPU or an MCU is configured into the computing unit involved in this embodiment of this specification by using a bus, and the bus may be, for example, a PCIE/I2C/SPI or another typical communication bus.

The inputted parameters may alternatively be pre-stored in a processor, and when computing starts, the parameters are outputted from an internal storage unit of the processor to the twiddle factor computing module.

Then, in step 62, a pre-computing result including an inter-line step factor and several initial lines of twiddle factors is computed based on the parameters. It may be understood that the processing process may be performed by a plurality of pre-computing units in parallel.

In an example, the pre-computing unit includes several modular multiplication units, and the several modular multiplication units are configured to perform modular multiplication computing in parallel, to obtain the inter-line step factor including a maximum power of the primitive root of unity, and the initial lines of twiddle factors in a column direction of a pre-computed line quantity, where the maximum power and the pre-computed line quantity are determined according to a pipelining depth of the modular multiplication units.

Further, the modular multiplication computing includes:

performing first modular multiplication on two primitive roots of unity of a same power; or

performing second modular multiplication on a primitive root of unity of a first power and a primitive root of unity of a second power, where a difference between the second power and the first power is 1.

For example, by using a primitive root of unity $w$, several initial lines of twiddle factors and an inter-line step factor in a column direction, for example, $w^2, w^3, w^4...w^C$ are pre-computed.

In the foregoing procedure, according to an inputted modular multiplication unit pipelining depth $\textbf{\textit{PipDepth}}$, an inter-line step factor $w^2...w^{PipDepth}$ whose maximum power needs to be computed and a pre-computed line quantity $\textbf{\textit{line}}1\textbf{\textit{line}}2...\textbf{\textit{line PipDepth}}$ are determined. Herein, a total quantity of a line refers to a quantity of twiddle factor points in a line direction, that is, $\textbf{\textit{R}}$. There are two types of initial lines $\textbf{\textit{line}}1$ of twiddle factors in 2-D NTT, where one type is $\textbf{\textit{C}}$ point $w^0$, the other type is $w^0 w^1...w^{C-1}$, $\textbf{\textit{C}}$ point $w^0$ only needs to be initialized to be all 1, and no additional computing is needed; and $w^0 w^1...w^{C-1}$ is computed by several pre-computing units in parallel.

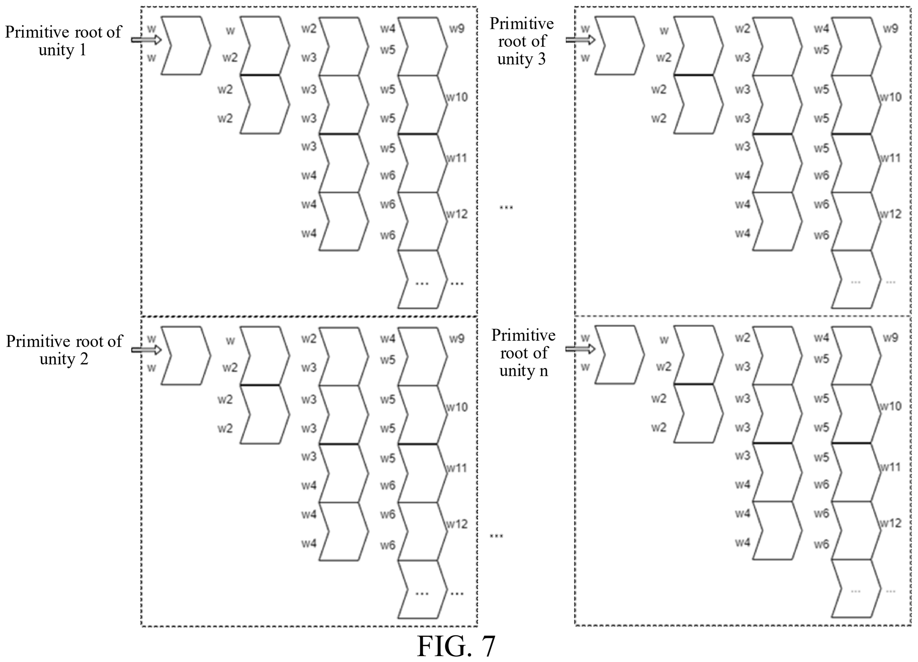

FIG. 7 is a schematic diagram of computing initial lines in parallel according to an embodiment. Referring to FIG. 7, an ellipsis in the figure indicates that no particular requirement is imposed on a quantity of parallel pre-computing units. $w^{2n} = w^n * w^n \quad w^{2n-1} = w^n * w^{n+1}$, where * represents multiplication in a modular sense. It can be seen from the foregoing formula that, performance of parallel computing of performing modular multiplication by splitting into powers $\textbf{\textit{n}}$ and $\textbf{\textit{n+1}}$ is good. In an actual NTT computing process, there are usually dozens of primitive roots of unity. Therefore, a plurality of corresponding initial lines may be computed in parallel to obtain very high computing efficiency.

In this embodiment of this specification, first, twiddle factors of the initial first line are computed, and after the initial first line is computed, the remaining initial lines are computed according to $\textbf{\textit{PipDepth}}$. An example is as follows: If $\textbf{\textit{PipDepth}} = 2$, $\textbf{\textit{line}}1 \ \textbf{\textit{line}}2$ needs to be computed. Therefore, real-time pipelining computing of the twiddle factor $\textbf{\textit{line}} 1... \textbf{\textit{line R}}$ may be implemented.

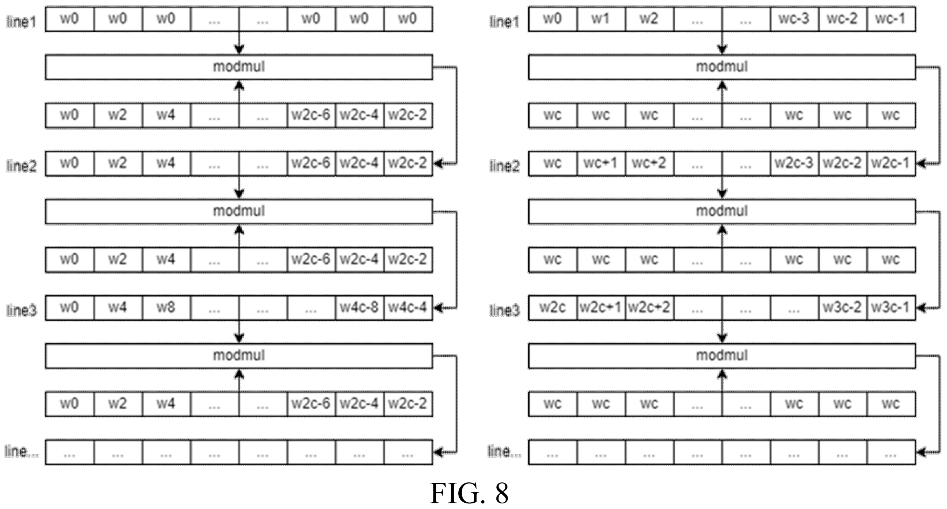

FIG. 8 is a schematic diagram of correspondingly computing an initial second line according to an initial first line according to an embodiment. Referring to FIG. 8, situations in which initial lines $\textbf{\textit{line}}1$ are $\textbf{\textit{C}}$ point $w^0$ and $w^0 w^1...w^{C-1}$ and $\textbf{\textit{line}}2$ is correspondingly computed are separately shown. In the figure, modmul indicates modular multiplication, that is, multiplication in a modular sense; the remaining $\textbf{\textit{PipDepth}}$ situations may be obtained by analogy according to the foregoing example, and are not described in detail again; modmul herein means a plurality of parallel computing units, whose quantity usually corresponds to a total quantity $\textbf{\textit{C}}$ of points in a line; and without loss of generality, in the figure, $\textbf{\textit{line}}$ $\textbf{\textit{PipDepth}}$ needs to be computed at most. The several initial lines of twiddle factors and the inter-line step factor that are computed are inputted into pre-storage units, whose quantity usually corresponds to a total quantity $\textbf{\textit{C}}$ of points in a line.

Next, in step 63, the pre-computing result is fed into a real-time computing array. It may be understood that the real-time computing array includes a plurality of real-time computing units, which may compute twiddle factors in parallel.

For example, $\textbf{\textit{C}}$ twiddle factors in the several initial lines are respectively fed into a real-time computing array for twiddle factors, and the array has a total of C real-time computing units.

Next, in step 64, all lines of twiddle factors are repeatedly and iteratively computed by using the real-time computing array. It may be understood that when a relatively large quantity of lines of twiddle factors need to be computed, all the lines of twiddle factors cannot be computed at once.

In an example, the plurality of real-time computing units is specifically configured to repeatedly and iteratively compute, for one line of twiddle factors of several initial lines of twiddle factors in a column direction that are obtained by the pre-computing units, other lines of twiddle factors different from the several initial lines of twiddle factors in the column direction according to an inter-line step factor in the column direction; and repeatedly and iteratively compute, for one line of twiddle factors of several initial lines of twiddle factors in a line direction, other lines of twiddle factors different from the several initial lines of twiddle factors in the line direction according to an inter-line step factor in the line direction.

For example, the C real-time computing units repeatedly and iteratively compute each line of twiddle factors according to the inter-line step factor.

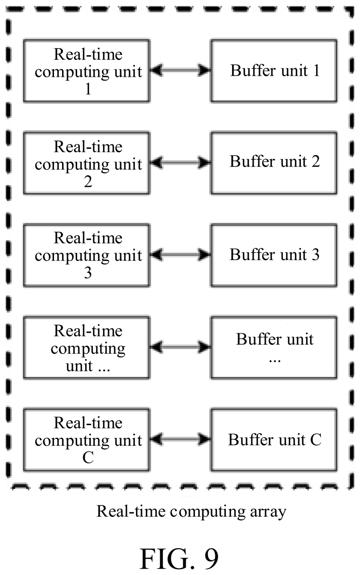

FIG. 9 is a schematic structural diagram of a real-time computing array according to an embodiment. Referring to FIG. 9, the real-time computing array includes C real-time computing units, each of which is connected to a buffer unit. A real-time computing unit acquires an inter-line step factor $w^2...w^{PipDepth}$ and a pre-computing line quantity $\textbf{\textit{line}}1\textbf{\textit{line}}2... \textbf{\textit{line PipDepth}}$ from a pre-storage unit to perform real-time computing, and a computed twiddle factor enters a buffer unit.

For example, if *PipDepth = 2*, **line3** to *lineR* are computed in real time; and
if *PipDepth = n*, **line n + 1** to *lineR* are computed in real time.

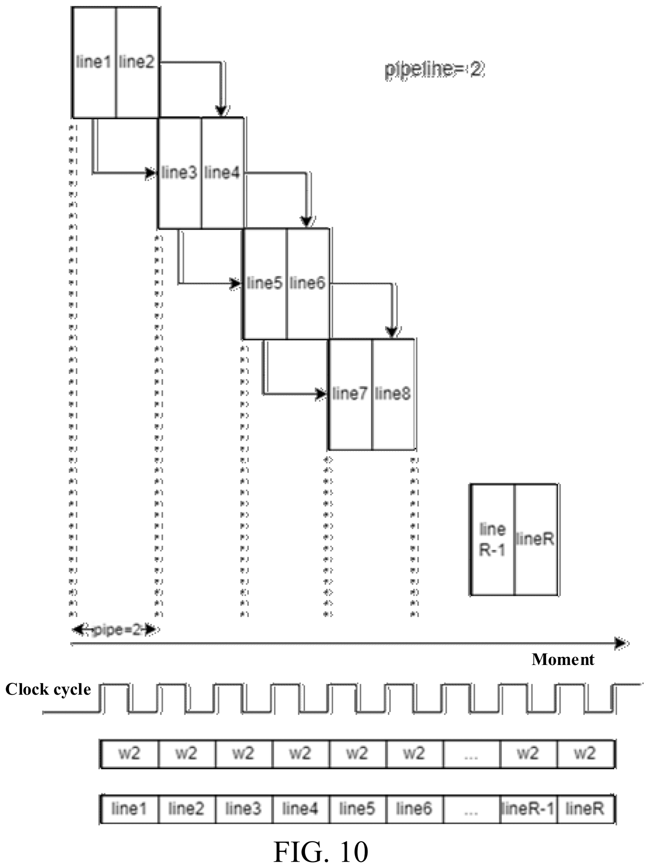

FIG. 10 is a schematic diagram of a real-time computing process and a computing time sequence according to an embodiment. Referring to FIG. 10, using *PipDepth = 2* as an example, PipDepth is pipe, initial lines are line1 and line2, an inter-line step factor is w2, line3 is computed according to line1 and w2, line4 is computed according to line2 and w2, line5 is computed according to line3 and w2, line6 is computed according to line4 and w2, and the rest can be deduced by analogy, to perform iterative computing. A buffer unit buffers several lines of twiddle factors computed in real time, to deal with bandwidth fluctuation of a data interface between different computing units.

Next, in step 65, each line of computed twiddle factors is selected. It may be understood that, the foregoing processing process may be performed by an interconnection selection unit.

In an example, the interconnection selection unit includes:

a counter subunit, configured to generate, according to an externally inputted clock cycle signal, a time rhythm control signal that uses an NTT point quantity as a cycle;
a control subunit, configured to determine, according to the time rhythm control signal generated by the counter subunit, a specific point location and a specific order that are used for NTT computing and that are of a twiddle factor outputted at a current moment;
an address computing subunit, configured to compute an index number of the currently corresponding twiddle factor according to the specific point location and the specific order for the NTT computing that are obtained by the control subunit; and
a selection subunit, configured to select, according to the index number obtained by the address computing subunit, the corresponding twiddle factor from a line of twiddle factors buffered by the plurality of buffer units.

Further, the interconnection selection unit further includes:

a plurality of interconnection subunits, configured to connect to the plurality of butterfly computing units in a one-to-one correspondence, where
the selection subunit is further configured to output the selected twiddle factor to an interconnection subunit corresponding to the index number.

For example, a twiddle factor needed by an NTT computing unit of each order is selected from a line of twiddle factors computed by a real-time computing unit.

In this embodiment of this specification, the design basis of the interconnection selection unit is: In the fast number-theoretic transform, for butterfly computing of each order, several twiddle factors are repeated, and may be compressed.

Using 32-point NTT computing as an example,

each twiddle factor used in all the first-order butterfly transforms is 1;
2 twiddle factors are used in all the second-order butterfly transforms, and are respectively 1 and $w^8$;
4 twiddle factors are used in all the 3rd-order butterfly transforms, and are respectively 1 and $w^4$ $w^8$ $w^{12}$;
...
there are a total of 16 twiddle factors in the 5th order.

Therefore, a total quantity of one line of twiddle factors is 1 +2 +4 +8 +16 = 31.

However, a total quantity of twiddle factors required by 32-point NTT is actually 80. Therefore, extension or expansion from 31 twiddle factors to 80 twiddle factors are implemented by using the interconnection selection unit. Without loss of generality, a total quantity of compressed twiddle factors for N-point NTT computing is 1 +2 +4 +... +N/2.

Specifically, the interconnection selection unit includes the following four components: 1, a counter unit; 2, a control unit; 3, an address computing unit; 4, a selection unit; and 5, an interconnection unit. To reflect an inclusion relationship between units in terms of names, the counter unit may be referred to as a counter subunit, the control unit may be referred to as a control subunit, the address computing unit may be referred to as an address computing subunit, the selection unit may be referred to as a selection subunit, and the interconnection unit may be referred to as an interconnection subunit.

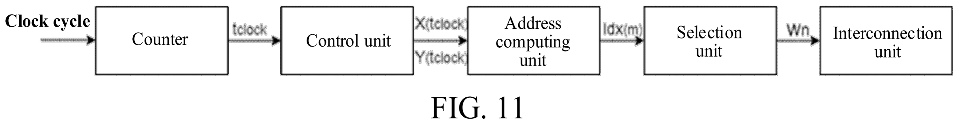

FIG. 11 is a schematic diagram of a composition structure of an interconnection selection unit according to an embodiment. Referring to FIG. 11, a counter unit, referred to as a counter for short, generates, according to an externally inputted clock cycle signal, a time rhythm control signal that uses an NTT point quantity as a cycle; a control unit determines, according to a working time rhythm with which the interconnection selection unit is controlled by the counter, a specific point location and a specific order that are used for NTT computing and that are of a twiddle factor outputted at a current moment; an address computing unit computes an index number of a buffer unit in a real-time computing array for a currently corresponding twiddle factor according to time rhythm information provided by the control unit and with reference to information such as the specific point location and the specific order for the NTT computing; a selection unit selects, according to the index number of the buffer unit outputted by the address computing unit, corresponding twiddle factors from **C** buffer units in the real-time computing array, and outputs the corresponding twiddle factors to an interconnection unit, where the number falls within an interval of 1 to C; and the interconnection unit distributes the twiddle factors selected from the buffer units to an adjacent interconnection unit through an interconnection interface.

Without loss of generality, $t_{clock}$ represents the time rhythm information provided by the counter, $t_{clock}$ is a variable that increases at a fixed time interval, a change range is cyclic, and a change cycle depends on an NTT point quantity. $X(t_{clock})$ and $Y(t_{clock})$ represent a point location and an order of NTT computing provided by the control unit, and an index number $Idx(m)$ of a buffer unit in the real-time computing array corresponding to a moment $t_{clock}$ may be computed in the following manner:

$$Idx(m) = 2^{Y(t_{clock})} + X(t_{clock}) \% 2^{Y(t_{clock})} \quad (1 \leq m \leq M)$$

$$m(X(t_{clock}), Y(t_{clock})) = Y(t_{clock}) * (X(t_{clock}) + 1) + X(t_{clock})$$

% in the foregoing formula represents remainder processing.

Using **N = R * C = 65536, R = *256*, C = 256** as an example, the real-time computing array includes **C = 256** computing units and buffer units, $t_{clock}$ incrementally changes by using 256 as a cycle, that is, changes to 256 and then returns to 1, and 256-point NTT computing is performed in 1 line. For each order, there are 128 twiddle factors, and there are a total of 8 orders. $0 \leq X(t_{clock}) \leq 127$ $0 \leq Y(t_{clock}) \leq 7$ **M = 128 * 8**. By traversing all values within value ranges of $X(t_{clock})$ and $Y(t_{clock})$, all $Idx(m)$ may be obtained, and actually $1 \leq Idx(m) \leq 256.$

Finally, in step 66, the selected twiddle factors are integrated into NTT computing. It may be understood that, the NTT computing is performed by the NTT computing unit. Specifically, the selected twiddle factors may be integrated into NTT computing units of each order.

In this embodiment of this specification, the NTT computing unit may be equivalent to the foregoing butterfly computing unit.

A basis for integrating the selected twiddle factors and NTT computing is as follows:

$X(t_{clock})$ and $Y(t_{clock})$ depend on $t_{clock}$, where $X(t_{clock})$ may represent numbers of two points inputted to the butterfly in a vertical direction in the NTT computing, the two points are used as a number unit, $Y(t_{clock})$ may represent a current order of the NTT computing, and $n(X(t_{clock}), Y(t_{clock})$ indicates a butterfly number of a specific order in the NTT. Therefore, $m(X(t_{clock}), Y(t_{clock}))$ and $n(X(t_{clock}), Y(t_{clock}))$ may be in a one-to-one correspondence apparently.

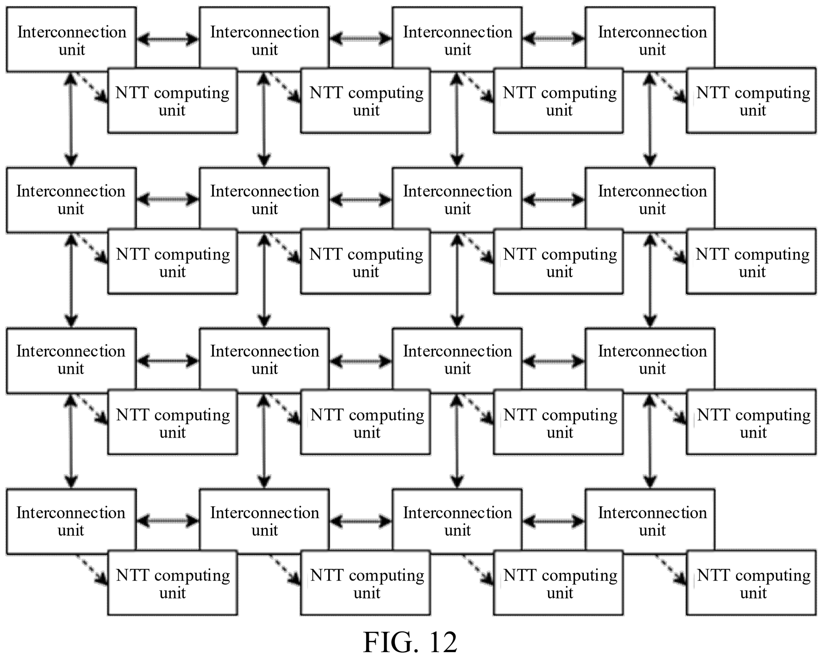

FIG. 12 is a schematic diagram of a correspondence between interconnection units and NTT computing units according to an embodiment. Referring to FIG. 12, interconnection units and NTT computing units are in a one-to-one correspondence. That is, the quantity of interconnection units is equal to the quantity of NTT computing units.

It should be noted that the computing architecture mentioned in the embodiments of this specification may run on a field-programmable gate array (FPGA), a CPU, a GPU, or an application-specific integrated circuit (ASIC). The processor types include but are not limited to the foregoing processor types.

In addition, the foregoing interconnection selection unit may be detached, that is, the NTT twiddle factors of all orders are not compressed, and are all computed in real time and directly integrated with the NTT computing unit, without affecting normal computing of the NTT. This solution may sacrifice many computing resources.

In addition, the foregoing pre-computing unit may be detached, that is, all the several initial lines of twiddle factors and the inter-line step factor that are pre-computed may be inputted to the real-time computing unit from an external interface; or the several initial lines of twiddle factors and the inter-line step factor are stored inside the processor in a manner of pre-storage, and are inputted into the real-time computing unit at a start moment of computing. This solution sacrifices interface bandwidth or sacrifices many on-chip storage resources, resulting in a waste of the chip area.

In addition, in addition to an interconnection selection manner, twiddle factors may also be directly expanded and filled in a replication manner; and when the NTT point quantity is very large, the direct replication manner causes very large signal fan-out of a same twiddle factor in a same order of NTT.

The pre-computing array, the real-time computing array, and the interconnection selection array in this embodiment of this specification may operate in different main operating frequencies; and a specific quantity of each type of arrays is not limited. That is, computing architectures corresponding to the foregoing arrays with different quantities and different main operating frequencies all fall within the scope of this solution.

According to the acceleration chip provided in this embodiment of this specification, the twiddle factor computing module, the transposition module, and the NTT computing module included in the acceleration chip respectively

**EP 4 764 824 A1**

correspond to different stages of the first pipeline processing task, on-chip full-pipelining real-time computing of twiddle factors is implemented, and consumption of off-chip interface bandwidth and on-chip storage resources is reduced to the greatest extent; and interfaces between the twiddle factor computing module and the NTT computing module are integrated, thereby implementing full-pipelining real-time computing of the NTT computing module. The twiddle factor computing module includes a plurality of pre-computing units, and is configured to pre-compute several initial lines of twiddle factors and an inter-line step factor, so that on-chip pre-storage resources and off-chip interface bandwidth can be effectively reduced, and a large quantity of twiddle factors do not need to be externally loaded; and pre-computing the several initial lines of twiddle factors and the inter-line step factor can effectively compress a pipelining gap between real-time computing units, thereby implementing real-time computing between twiddle factor lines, and effectively improving computing efficiency. In conclusion, efficiency of NTT computing can be improved.

The embodiments of this specification have the following improvements compared with a common processing manner: In this solution, on-chip full-pipelining real-time computing of twiddle factors is implemented, and consumption of off-chip interface bandwidth and on-chip storage resources is reduced to the greatest extent: the pre-computing all the several initial lines of twiddle factors and the inter-line step factor provided in this solution can effectively reduce on-chip pre-storage resources and off-chip interface bandwidth, and a large quantity of twiddle factors do not need to be externally loaded; the pre-computing all the several initial lines of twiddle factors and the inter-line step factor provided in this solution can effectively compress a pipelining gap brought by a pipelining depth of multiplication in a modular sense, thereby implementing real-time computing between twiddle factor lines, and effectively improving computing efficiency; and the interconnection selection design provided in this solution effectively uses a repetition feature of the twiddle factors, that is, compressible, thereby reducing on-chip storage resources, which not only implements expansion and filling of the twiddle factors, but also can greatly reduce a signal replication amount, thereby effectively reducing signal fan-out. In this solution, all computing units and buffer units on a chip are atomized and arrayed: quantities of computing units and buffer units may be flexibly adjusted according to any NTT point quantity, to flexibly adapt to a change of the NTT point quantity; main operating frequencies are isolated between operation arrays; and integration with interfaces between the NTT computing units is implemented, thereby implementing real-time full-pipelining computing of the NTT computing units.

The embodiments of this specification can achieve the following technical effects: The use of an on-chip memory is effectively reduced, thereby reducing the area of a chip; the quantity of access times of the chip to an external storage unit and an access data volume are effectively reduced, thereby reducing an access bandwidth requirement for the external storage unit; a computing process has real-time performance and the entire process is pipelined, thereby improving computing efficiency of the entire NTT; real-time configuration of a primitive root of unity of a twiddle factor is supported, NTT computing of different lengths is supported, and the solution has flexibility and universality; and the design of a minimum computing unit is supported, and the computing units are atomized, so that hardware circuits of different scales can be flexibly integrated; and a same twiddle factor is transferred in a manner of interconnection, and replication of a large-area signal is changed into data interconnection transfer in a small range, thereby greatly reducing a signal replication amount and effectively reducing signal fan-out.

According to an embodiment of another aspect, a computer-readable storage medium is further provided. The computer-readable storage medium has a computer program stored thereon. When the computer program is executed in a computer, the computer is caused to perform the method described with reference to FIG. 6.

According to an embodiment of still another aspect, a computing device is further provided, including a memory and a processor. The memory has executable code stored thereon. When the processor executes the executable code, the method described with reference to FIG. 6 is implemented.

A person skilled in the art may be aware that in the foregoing one or more examples, the functions described in the present invention may be implemented using hardware, software, firmware, or any combination thereof. When implemented using software, the functions may be stored in a computer-readable medium or may be used as one or more instructions or code in the computer-readable medium for transmission.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

**Claims**

1.    A fast number-theoretic transform NTT acceleration chip, the acceleration chip comprising:

a twiddle factor computing module, comprising a plurality of pre-computing units and a plurality of real-time computing units, wherein the plurality of pre-computing units is configured to compute several initial lines of twiddle factors and an inter-line step factor in parallel by using a primitive root of unity; and the plurality of real-time computing units is configured to repeatedly and iteratively compute, for one line of twiddle factors of the several initial lines of twiddle factors obtained by the plurality of pre-computing units, other lines of twiddle factors different from the several initial lines of twiddle factors in parallel according to the inter-line step factor;

a transposition module, comprising a plurality of transposition units, configured to perform transposition processing on an input sequence in parallel, to obtain a transposed sequence; and

an NTT computing module, comprising a plurality of butterfly computing units, configured to perform a butterfly operation of orders and a point quantity in parallel according to the twiddle factors obtained by the twiddle factor computing module and the transposed sequence obtained by the transposition module, to obtain an output sequence, wherein the twiddle factor computing module, the transposition module, and the NTT computing module respectively correspond to different stages of a first pipeline processing task.

2. The acceleration chip according to claim 1, wherein the pre-computing units and the real-time computing units respectively correspond to different stages of a second pipeline processing task, and the second pipeline processing task is a sub-task of the first pipeline processing task.

3. The acceleration chip according to claim 1, wherein the twiddle factor computing module further comprises:

a plurality of pre-storage units, configured to store in parallel the several initial lines of twiddle factors and the inter-line step factor obtained by the plurality of pre-computing units, wherein

the plurality of real-time computing units is specifically configured to read, from the plurality of pre-storage units, the one line of twiddle factors of the several initial lines of twiddle factors and the inter-line step factor obtained by the plurality of pre-computing units.

4. The acceleration chip according to claim 1, wherein the twiddle factor computing module further comprises:

a plurality of buffer units, configured to buffer in parallel the other lines of twiddle factors different from the several initial lines of twiddle factors obtained by the plurality of real-time computing units; and

a plurality of interconnection selection units, configured to select in parallel a twiddle factor required by a butterfly operation of a target order from a line of twiddle factors buffered by the plurality of buffer units, and connect the selected twiddle factor to a butterfly computing unit of the target order.

5. The acceleration chip according to claim 1, wherein the primitive root of unity is externally inputted.

6. The acceleration chip according to claim 1, wherein the pre-computing unit comprises several modular multiplication units, and the several modular multiplication units are configured to perform modular multiplication computing in parallel, to obtain the inter-line step factor comprising a maximum power of the primitive root of unity, and the initial lines of twiddle factors in a column direction of a pre-computed line quantity, wherein the maximum power and the pre-computed line quantity are determined according to a pipelining depth of the modular multiplication units.

7. The acceleration chip according to claim 6, wherein the modular multiplication computing comprises:

performing first modular multiplication on two primitive roots of unity of a same power; or

performing second modular multiplication on a primitive root of unity of a first power and a primitive root of unity of a second power, wherein a difference between the second power and the first power is 1.

8. The acceleration chip according to claim 1, wherein the plurality of real-time computing units is specifically configured to repeatedly and iteratively compute, for one line of twiddle factors of several initial lines of twiddle factors in a column direction that are obtained by the pre-computing units, other lines of twiddle factors different from the several initial lines of twiddle factors in the column direction according to an inter-line step factor in the column direction; and repeatedly and iteratively compute, for one line of twiddle factors of several initial lines of twiddle factors in a line direction, other lines of twiddle factors different from the several initial lines of twiddle factors in the line direction according to an inter-line step factor in the line direction.

9. The acceleration chip according to claim 4, wherein the interconnection selection unit comprises:

a counter subunit, configured to generate, according to an externally inputted clock cycle signal, a time rhythm control signal that uses an NTT point quantity as a cycle;

a control subunit, configured to determine, according to the time rhythm control signal generated by the counter subunit, a specific point location and a specific order that are used for NTT computing and that are of a twiddle factor outputted at a current moment;

an address computing subunit, configured to compute an index number of the currently corresponding twiddle factor according to the specific point location and the specific order for the NTT computing that are obtained by the control subunit; and

a selection subunit, configured to select, according to the index number obtained by the address computing subunit, the corresponding twiddle factor from a line of twiddle factors buffered by the plurality of buffer units.

10. The acceleration chip according to claim 9, wherein the interconnection selection unit further comprises:

a plurality of interconnection subunits, configured to connect to the plurality of butterfly computing units in a one-to-one correspondence, wherein

the selection subunit is further configured to output the selected twiddle factor to an interconnection subunit corresponding to the index number.

FIG. 1

21

Twiddle factor computing module

Buffer unit

22

23

| Butterfly computing unit | Butterfly computing unit | Butterfly computing unit | ... |
| Butterfly computing unit | Butterfly computing unit | Butterfly computing unit | |
| Butterfly computing unit | Butterfly computing unit | Butterfly computing unit | |
| Butterfly computing unit | Butterfly computing unit | Butterfly computing unit | ... |

NTT computing module

| ... | ... | ... | ... |

| Butterfly computing unit | Butterfly computing unit | Butterfly computing unit | ... |
| Butterfly computing unit | Butterfly computing unit | Butterfly computing unit | |
| Butterfly computing unit | Butterfly computing unit | Butterfly computing unit | |
| Butterfly computing unit | Butterfly computing unit | Butterfly computing unit | ... |

Transposition module

Buffer unit

Buffer unit

External interface

FIG. 2

EP 4 764 824 A1

FIG. 3

FIG. 4

| Pre-computing | Pre-computing | Pre-computing | Pre-computing |
|---|---|---|---|
| Pre-computing | Pre-computing | Pre-computing | Pre-computing |
| Pre-computing | Pre-computing | Pre-computing | Pre-computing |
| ... | ... | ... | ... |
| Pre-computing | Pre-computing | Pre-computing | Pre-computing |
| Pre-computing | Pre-computing | Pre-computing | Pre-computing |
| Pre-computing | Pre-computing | Pre-computing | Pre-computing |
| Pre-computing | Pre-computing | Pre-computing | Pre-computing |

T0    T1    T2    T3        Tn                                **Moment**

FIG. 5

```
┌─────────────────────────────────────────────────┐  ⌐61
│              Receive parameters                 │
└─────────────────────────────────────────────────┘
                         │
                         ▼                             ⌐62
┌─────────────────────────────────────────────────┐
│  Compute, based on the parameters, a pre-computing result │
│  including an inter-line step factor and several initial lines of │
│                twiddle factors                  │
└─────────────────────────────────────────────────┘
                         │
                         ▼                             ⌐63
┌─────────────────────────────────────────────────┐
│  Feed the pre-computing result into a real-time computing │
│                    array                        │
└─────────────────────────────────────────────────┘
                         │
                         ▼                             ⌐64
┌─────────────────────────────────────────────────┐
│  Repeatedly and iteratively compute all lines of twiddle │
│     factors by using the real-time computing array │
└─────────────────────────────────────────────────┘
                         │
                         ▼                             ⌐65
┌─────────────────────────────────────────────────┐
│       Select each line of computed twiddle factors │
└─────────────────────────────────────────────────┘
                         │
                         ▼                             ⌐66
┌─────────────────────────────────────────────────┐
│  Integrate the selected twiddle factors into NTT computing │
└─────────────────────────────────────────────────┘
```

FIG. 6

FIG. 7

EP 4 764 824 A1

| line1 | w0 | w0 | w0 | ... | ... | w0 | w0 | w0 |
|---|---|---|---|---|---|---|---|---|

| modmul |
|---|

| | w0 | w2 | w4 | ... | ... | w2c-6 | w2c-4 | w2c-2 |
|---|---|---|---|---|---|---|---|---|

| line2 | w0 | w2 | w4 | ... | ... | w2c-6 | w2c-4 | w2c-2 |
|---|---|---|---|---|---|---|---|---|

| modmul |
|---|

| | w0 | w2 | w4 | ... | ... | w2c-6 | w2c-4 | w2c-2 |
|---|---|---|---|---|---|---|---|---|

| line3 | w0 | w4 | w8 | ... | ... | ... | w4c-8 | w4c-4 |
|---|---|---|---|---|---|---|---|---|

| modmul |
|---|

| | w0 | w2 | w4 | ... | ... | w2c-6 | w2c-4 | w2c-2 |
|---|---|---|---|---|---|---|---|---|

| line... | ... | ... | ... | ... | ... | ... | ... | ... |
|---|---|---|---|---|---|---|---|---|

| line1 | w0 | w1 | w2 | ... | ... | wc-3 | wc-2 | wc-1 |
|---|---|---|---|---|---|---|---|---|

| modmul |
|---|

| | wc | wc | wc | ... | ... | wc | wc | wc |
|---|---|---|---|---|---|---|---|---|

| line2 | wc | wc+1 | wc+2 | ... | ... | w2c-3 | w2c-2 | w2c-1 |
|---|---|---|---|---|---|---|---|---|

| modmul |
|---|

| | wc | wc | wc | ... | ... | wc | wc | wc |
|---|---|---|---|---|---|---|---|---|

| line3 | w2c | w2c+1 | w2c+2 | ... | ... | ... | w3c-2 | w3c-1 |
|---|---|---|---|---|---|---|---|---|

| modmul |
|---|

| | wc | wc | wc | ... | ... | wc | wc | wc |
|---|---|---|---|---|---|---|---|---|

| line... | ... | ... | ... | ... | ... | ... | ... | ... |
|---|---|---|---|---|---|---|---|---|

FIG. 8

Real-time computing array

FIG. 9

pipeline=2

line1 | line2

line3 | line4

line5 | line6

line7 | line8

line R-1 | lineR

pipe=2

Moment

Clock cycle

| w2 | w2 | w2 | w2 | w2 | w2 | ... | w2 | w2 |

| line1 | line2 | line3 | line4 | line5 | line6 | ... | lineR-1 | lineR |

FIG. 10

EP 4 764 824 A1

**Clock cycle** → | Counter | —tclock→ | Control unit | —X(tclock), Y(tclock)→ | Address computing unit | —Idx(m)→ | Selection unit | —Wn→ | Interconnection unit |

FIG. 11

| Interconnection unit | ⟷ | Interconnection unit | ⟷ | Interconnection unit | ⟷ | Interconnection unit |
|---|---|---|---|---|---|---|

| NTT computing unit | NTT computing unit | NTT computing unit | NTT computing unit |
|---|---|---|---|

| Interconnection unit | ⟷ | Interconnection unit | ⟷ | Interconnection unit | ⟷ | Interconnection unit |
|---|---|---|---|---|---|---|

| NTT computing unit | NTT computing unit | NTT computing unit | NTT computing unit |
|---|---|---|---|

| Interconnection unit | ⟷ | Interconnection unit | ⟷ | Interconnection unit | ⟷ | Interconnection unit |
|---|---|---|---|---|---|---|

| NTT computing unit | NTT computing unit | NTT computing unit | NTT computing unit |
|---|---|---|---|

| Interconnection unit | ⟷ | Interconnection unit | ⟷ | Interconnection unit | ⟷ | Interconnection unit |
|---|---|---|---|---|---|---|

| NTT computing unit | NTT computing unit | NTT computing unit | NTT computing unit |
|---|---|---|---|

FIG. 12

Europäisches
Patentamt

European
Patent Office

Office européen
des brevets

# EUROPEAN SEARCH REPORT

**Application Number**

EP 25 22 1486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUAN ZHENYU ET AL: "ESC-NTT: An Elastic, Seamless and Compact Architecture for Multi-Parameter NTT Acceleration", 2024 DESIGN, AUTOMATION & TEST IN EUROPE CONFERENCE & EXHIBITION (DATE) EDAA, 25 March 2024 (2024-03-25), pages 1-6, XP034616067, [retrieved on 2024-06-10] * abstract * * figures 3, 4, 5 * * tables I, II * * Sections I, III, and IV-B * | 1-10 | INV. G06F7/72 G06F17/14 |
| X | KRIEGER FLORIAN ET AL: "OpenNTT - An Automated Toolchain for Compiling High-Performance NTT Accelerators in FHE", PROCEEDINGS OF THE 3RD WORKSHOP ON SERVERLESS SYSTEMS, APPLICATIONS AND METHODOLOGIES ACMPUB27, NEW YORK, NY, USA, 27 October 2024 (2024-10-27), pages 1-9, XP059886008, DOI: 10.1145/3676536.3697123 ISBN: 9798400715570 * abstract * * figures 4, 5 * * Sections 1, 2.3, and 3 * | 1 | |
| X | WANG CHENG ET AL: "SAM: A Scalable Accelerator for Number Theoretic Transform Using Multi-Dimensional Decomposition", 2023 IEEE/ACM INTERNATIONAL CONFERENCE ON COMPUTER AIDED DESIGN (ICCAD) IEEE, 28 October 2023 (2023-10-28), pages 1-9, XP034479245, DOI: 10.1109/ICCAD57390.2023.10323744 [retrieved on 2023-11-30] * abstract * * figures 2, 3 * * Section I and III * | 1 | TECHNICAL FIELDS SEARCHED (IPC) G06F H04L |

The present search report has been drawn up for all claims

| Place of search | Date of completion of the search | Examiner |
|---|---|---|
| Munich | 7 May 2026 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)